# EUROPÄISCHE PATENTANMELDUNG

(11) **EP 0 898 091 A1**
(43) Veröffentlichungstag der Anmeldung: **24.02.1999**
(21) Anmeldenummer: 98114694.7
(22) Anmeldetag: 05.08.1998
(51) Int. Cl.: F16D 13/75

(54) **Reibungskupplung, insbesondere für Kraftfahrzeuge**

(30) Priorität: 22.08.1997 DE 19736557
(71) Anmelder: DAIMLER-BENZ AKTIENGESELLSCHAFT, 70567 Stuttgart (DE)
(72) Erfinder: Beitler, Hubert, 70806 Kornwestheim (DE); Tscheplak, Ernst, 71384 Weinstadt (DE)

(57) **Zusammenfassung**

Die Erfindung betrifft eine Reibungskupplung und Einrichtungen in der Betätigung dieser Reibungskupplung, durch die der Betätigungskraftverlauf weitgehend unabhängig vom Verschleiß der Kupplungsscheibe gehalten wird.

## Beschreibung

Die Erfindung betrifft eine Reibungskupplung, insbesondere für Kraftfahrzeuge, gemäß dem Oberbegriff des Anspruches 1.

Bei einer bekannten derartigen Reibungskupplung (DE 4239289 A1) ist die Druckplatte über Blattfederelemente gegenüber dem Kupplungsgehäuse in Drehrichtung fixiert, wobei die Blattfederelemente sich in Umfangsrichtung, d.h. tangential zur Druckplatte erstrecken. Die Blattfederelemente sind im Sinne eines Abhubes der Druckscheibe von der Kupplungsscheibe zusätzlich axial vorgespannt, also entgegen der von der Tellerfeder auf die Druckscheibe ausgeübten Andrückkraft, so daß über die Blattfedern die zum Ausrücken der Kupplung aufzubringende Betätigungskraft verringert wird. Diese Maßnahme steht in Verbindung mit einer Nachstellvorrichtung, durch die der Schwenkpunkt der Tellerfeder zwischen deren radialäußerer Anlage an der Druckscheibe und der radialinneren Abstützung gegen das Ausrücklager in Abhängigkeit vom Verschleiß derart axial, d.h. in Achsrichtung der Kupplung verstellt wird, daß die Federcharakteristik der Tellerfeder weitgehend erhalten bleibt, da der axiale Abstand zwischen dem Schwenkpunkt der Tellerfeder und der Druckplatte ungeachtet eines etwaigen Verschleißes der Kupplungsscheibe im wesentlichen gleichbleibt. Die verhältnismäßig kleinen Änderungen, die sich bei der verschleißabhängigen Nachstellung des Schwenkpunktes im Axialabstand zwischen dem Schwenkpunkt und der Anlage der Tellerfeder am Ausrücklager ergeben, können über die Blattfedern kompensiert werden, ohne daß deren der Andrückkraft der Tellerfeder entgegengerichtete Kraftwirkung die Funktion der Kupplung beeinträchtigen würde.

Die Erfindung befaßt sich mit der gleichen Thematik und hat zum Ziel, eine Kompensation der in Abhängigkeit vom Verschleiß der Kupplungsscheibe auftretenden Veränderungen der Andrückkraft der Tellerfeder zu ermöglichen, insbesondere auch ohne Verwendung einer in Abhängigkeit vom Verschleiß der Kupplungsscheibe arbeitenden Nachstellvorrichtung für den Schwenkpunkt der Tellerfeder, so daß sich ein vereinfachter Kupplungsaufbau ergibt.

Erreicht wird dies durch die Merkmale des Anspruches 1, wobei durch die erfindungsgemäße Lösung auch ohne Nachstellvorrichtung verschleißbedingte Änderungen der Andrückkraft der Druckscheibe - im Sinne einer Vergrößerung der Andrückkraft - durch die überlagerte Gegenkraft kompensiert werden, die ausgehend von der der Ausgangsdicke der Kupplungsscheibe entsprechenden Ausgangslage der Druckscheibe wirksam wird. Bei der erfindungsgemäßen Lösung setzen die der Andrückkraft der Druckscheibe entgegenwirkenden Federmittel also erst in ihrer Wirkung ein, wenn sich verschleißabhängig Abweichungen von der konstruktiv gegebenen Ausgangslage ergeben, so daß die Arbeitscharalrteristik der Kupplung verschleißunabhängig erhalten bleibt, und dies auch bezüglich der zum Ausrücken der Kupplung aufzubringenden Betätigungskraft. In Abhängigkeit von der Art der Federmittel wie auch in Berücksichtigung der Änderungen im Verlauf der Andrückkraft, die sich verschleißabhängig ergeben, kann es zweckmäßig sein, die Federmittel so auszubilden und zu wählen, daß sie in ihrer Anschlagstellung nahezu vorspannungslos sind oder schon eine Vorspannung aufweisen. Auch bei Vorspannung der Federmittel wirkt sich diese allerdings nicht auf die zur Betätigung der Kupplung aufzubringenden Ausrückkraft, bzw. die Andrückkraft der Tellerfeder gegen die Druckscheibe aus, da eine Zuschaltung der Federkraft der Federmittel erst dann erfolgt, wenn verschleißbedingt eine Verlagerung der Druckscheibe erfolgt.

Eine solche Lösung läßt sich in besonders einfacher Weise realisieren, wenn die in der Betätigung der Kupplung vorgesehene Ausrückvorrichtung die die überlagerte Federkraft aufbringenden Federmittel beinhaltet.

Hierzu kann die Ausrückvorrichtung in bekannter Weise ein axial verschieblich geführtes Ausrücklager umfassen, das aus seiner der Ausgangsdicke der Kupplungsscheibe als Einstellage entsprechenden Ausgangsstellung axial gegen die Federmittel abhängig vom Verschleiß der Kupplungsscheibe verschiebbar ist, so daß die als Anschlag wirkenden und in ihrer Ausdehnung in Richtung auf das Ausrücklager auch durch einen Anschlag begrenzten Federmittel erst bei Verschleiß wirksam werden können. Bei der erfindungsgemäßen Lösung korrespondiert also die Ausgangsstellung des Ausrücklagers mit der Anschlagstellung der Federmittel.

Bei Verwendung von Kupplungsscheiben, die ihrerseits in bekannter Weise Belagfederelemente enthalten, somit der Anpresskraft der Druckscheibe entgegenwirkend eine Spreizkraft aufweisen, und bei denen bei geschlossener Kupplung die Anpresskraft der Tellerfeder die Belagfederelemente der Kupplungsscheibe entweder auf Block zusammendrückt oder im Gleichgewicht mit der Spreizkraft der Belagfederelemente steht, kann durch die erfindungsgemäße Lösung der Auslegungspunkt - geschlossene Kupplung - praktisch beibehalten werden, und es liegt dieser Punkt in bekannter Weise bevorzugt derart, daß in diesem Punkt die Spreizkraft der Belagfederelemente im Gleichgewicht zur Anpresskraft der Druckscheibe liegt, so daß bei Kompensation von verschleißabhängig, also abhängig vom Verschleiß der Kupplungsscheibe auftretenden Abweichungen in der Andrückkraft der Tellerfeder auf die Kupplungsscheibe durch die zusätzlichen Federelemente das Gleichgewicht zwischen Spreizkraft der Belagfederelemente und Andrückkraft erhalten bleibt, mithin die Andrückkraft und in entsprechender Weise auch die Betätigungskraft der Kupplung verschleißunabhängig in ihrer Charakteristik gleich bleiben.

Die Erfindung macht es so möglich, bei vereinfachten Kupplungsaufbau eine weitgehend verschleißunabhängige Betätigungscharakteristik für die Kupplung zu erhalten.

Weitere Einzelheiten und Merkmale der Erfindung ergeben sich aus den Ansprüchen. Ferner wird die Erfindung nachfolgend anhand von Zeichnungen noch näher erläutert. Es zeigen:
- Figur 1: eine Schemadarstellung einer Kupplung für Kraftfahrzeuge,
- Figur 2: in einem Kraft-Weg-Diagramm in grundsätzlicher Darstellung die Andrückkraft zwischen Druckplatte und Kupplungsscheibe einerseits und die erforderliche Ausrückkraft andererseits,
- Figur 3: in schematisierter Darstellung eine Ausrückvorrichtung gemäß der Erfindung, und
- Figuren 4-8: verschiedene Betriebsstellungen von Kupplung und Ausrückvorrichtung in Schemadarstellungen.

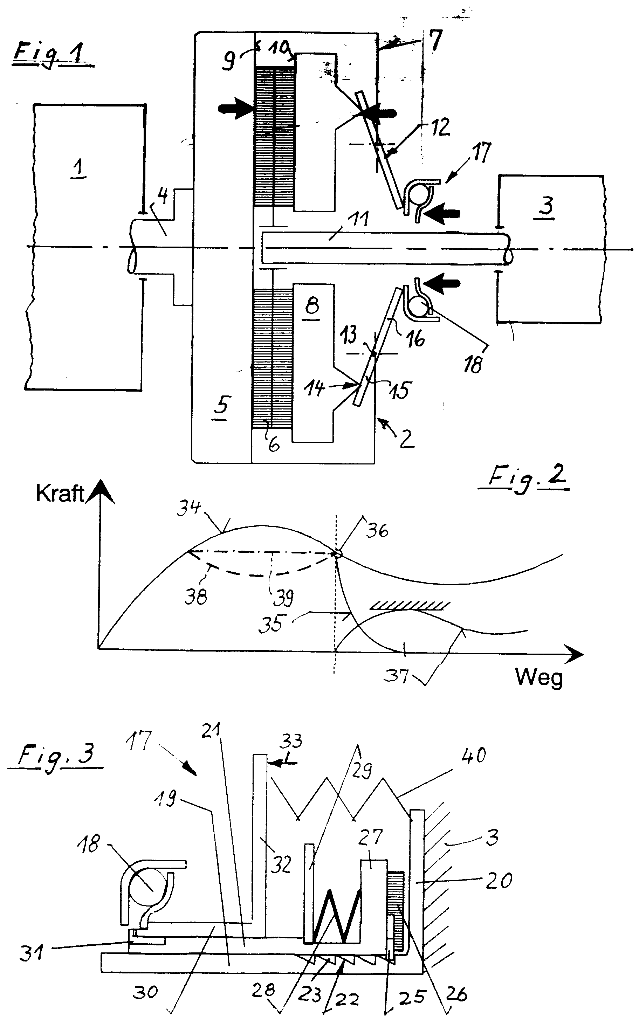

Figur 1 zeigt, stark schematisiert, die wesentlichen Teile eines Triebstranges eines Kraftfahrzeuges, nämlich den Motor 1 und das mit dem Motor 1 über eine Kupplung 2 verbundene Getriebe 3, von dem aus der Antrieb, was nicht weiter dargestellt ist, zu den Rädern des Kraftfahrzeuges führt.

Die Kurbelwelle des Motors 1 ist mit 4 bezeichnet und drehfest mit einem Schwungrad 5 verbunden, das zugleich einen Bestandteil der Kupplung 2 bildet, deren Kupplungsscheibe 6 zwischen dem Schwungrad 5 und einer über das Kupplungsgehäuse 7 mit diesem drehfest verbundenen Druckplatte 8 liegt. Schwungrad 5 und Druckplatte 8 bilden Anlageflächen 9 und 10 für die Kupplungsscheibe 6, die ihrerseits zentral drehfest auf einer zum Getriebe 3 führenden Welle 11, meist der Getriebeeingangswelle befestigt ist. Die Druckplatte 8 ist über eine Tellerfeder 12 beaufschlagbar, die ihrerseits am Kupplungsgehäuse 7 in einer Ringzone 13 schwenkbar abgestützt ist. Die Ringzone 13 liegt radial auf einem kleineren Durchmesser als die ebenfalls ringförmige Abstützung 14 zwischen der Tellerfeder 12 und der Druckplatte 8, wobei die Tellerfeder 12 in dem Ringbereich 15 zwischen den Abstützungen 13 und 14 bezüglich ihrer Andrückkraft gegen die Kupplungsscheibe 6 durch Änderung ihrer Konizität veränderlich ist. Hierauf wird anhand der Figur 2 noch näher eingegangen. Der radial innere, radial innerhalb der in der Ringzone 13 erfolgenden Schwenkabstützung der Tellerfeder 12 gegenüber dem Kupplungsgehäuse 7 liegende Ringbereich 16 der Tellerfeder ist üblicherweise durch radial verlaufende Finger gebildet, die in ihrem radial inneren Endbereich über die Ausrückvorrichtung 17 mit dem Ausrücklager 18 beaufschlagbar sind. Die Ausrückvorrichtung 17 ist, wie in Figur 3 angedeutet, gegenüber dem Getriebe 3 drehfest abgestützt, wobei der Übergang zwischen der feststehenden Ausrückvorrichtung 17 und der mit der Kurbelwelle 4 umlaufenden Kupplung 2 über das Ausrücklager 18 erfolgt.

Die Ausrückvorrichtung 17 weist in ihrer Prinzipdarstellung gemäß Figur 3 ein Trägerrohr 19 auf, das zentrisch zur Welle 11 liegt und diese umschließt, und zwar bei axialer Abstützung gegenüber einem Festteil des Fahrzeuges, so insbesondere gegenüber dem Getriebe 3. Auf dem Trägerrohr 19, das beispielsweise über einen Flansch 20 gegenüber dem Getriebe 3 befestigt ist, ist längsverschieblich ein Toleranzausgleichsrohr 21 geführt, wobei das Toleranzausgleichsrohr 21 über eine ratschenartige Rastverbindung 22 arretierbar ist. Im Ausführungsbeispiel umfaßt diese Rastverbindung 22, dem Außenumfang des Trägerrohres 19 zugeordnet ein Sägezahnprofil 23, das mit einem am Toleranzausgleichsrohr 21 vorgesehenen Schnappelement, hier einem Schnappring 25 zusammenwirkt, der einer Haltevorrichtung 26 zugeordnet ist. Die Haltevorrichtung 26 ist an dem getriebeseitigen Ende des Trägerrohres 19 befestigt, an dem das Trägerrohr 19 einen Bund 27 aufweist, gegen den sich eine Feder 28 abstützt, die als Kompensationsfeder gegen einen Anschlag 29 abgestützt ist, der gegenüber dem Toleranzausgleichsrohr 21 abgestützt ist und der als Ringplatte ausgebildet ist, die sich an einem stufenförmigen Absatz des Toleranzausgleichsrohres 21 abstützt. Auf dem Toleranzausgleichsrohr 21 ist desweiteren ein Ausrücklagerrohr 30 geführt, und zwar wiederum axial verschieblich, das an seinem vom Getriebe 3 abgelegenen und der Kupplung zugewandten Ende das Ausrücklager 18 trägt und dessen Verschiebeweg in Richtung auf die Kupplung durch einen Anschlag 31 begrenzt ist. In Gegenrichtung ist das Ausrücklagerrohr 30 endseitig mit einem Bund 32 versehen, gegen den sich eine zwischen dem Flansch 20 und dem Bund 32 eingespannte Rückdruckfeder 40 abstützt, durch die das Ausrücklager 18 in Anlage zur Tellerfeder 12 gehalten wird. Symbolisch ist durch den Pfeil 33 dargestellt, daß die nicht weiter gezeigte Kupplungsbetätigung über entsprechende Verstellmittel auf das Ausrücklagerrohr 30 wirkt und daß somit die zur Betätigung der Kupplung in diese einzuleitende Betätigungskraft am Ausrücklagerrohr 30 angreift.

Im eingerückten Zustand der Kupplung, der in Figur 1 dargestellt ist, ist die Kupplungsscheibe 6 zwischen den Anlageflächen 9 und 10 des Schwungrades 5 und der Druckplatte 8 eingespannt, wobei die von der Druckplatte 8 ausgehende Andrückkraft über die Tellerfeder 12 aufgebracht wird. Diese von der Tellerfeder 12 aufgebrachte Andrückkraft ist in Figur 2 in einem Kraft-Weg-Diagramm schematisiert dargestellt und mit 34 bezeichnet. Die Kupplungsscheibe 6 ist als zwischen Schwungrad 5 und Druckplatte 8 liegendes Reibelement mit entsprechenden Reibbelägen versehen und damit einem gewissen Verschleiß unterworfen, der im praktischen Einsatz zu einer verschleißbedingten Verringerung der Dicke der Kupplungsscheibe 6 führt. Nicht dargestellt ist in den Ausführungsbeispielen, daß die Kupplungsscheibe 6 üblicherweise auch axial federnd aufgebaut ist, was durch Belagfederelemente erreicht wird, die die Reibbeläge der Kupplungsscheibe 6 im Sinne einer Spreizung auseinander drücken und die, bei geschlossener Kupplung, soweit sie über die Andrückkraft der Tellerfeder nicht auf Block verspannt sind, in einem Gleichgewicht zu dieser Andrückkraft 34 stehen, wobei die angesprochene Belagfederkraft als Spreizkraft in der Darstellung gemäß Figur 2 mit 35 bezeichnet ist. Der Schnittpunkt der Andrückkraft 34 und der Belagfederkraft 35 bestimmt den Betriebspunkt einer neuen, also noch nicht verschleißbehafteten Kupplung. Ausgehend von diesem Betriebspunkt ergibt sich bei Betätigung der Kupplung ein Verlauf der Betätigungkraft für die Kupplung gemäß Linie 37 in Figur 2.

Wie Figur 2 zeigt ist die Lage des Betriebspunktes 36 derartig gelegt, daß die Andrückkraft 34, die der Tellerfederkraft entspricht, mit abnehmender Dicke der Kupplungsscheibe 6, d.h. also verschleißabhängig zunimmt. Eine solche verschleißabhängige Zunahme ist unter anderem deshalb unerwünscht, weil sie die Betätigungscharakteristik im Sinne einer schwereren Kupplungsbetätigung verändert, was schon aus Komfortgründen unerwünscht ist. Erfindungsgemäß wird deshalb verschleißabhängig der Andrückkraft 34 der Tellerfeder eine entgegengerichtete Federkraft überlagert, die durch die Kompensationsfeder 28 aufgebracht wird und die als Kompensationsfederkraft in Figur 2 mit dem Linienzug 38 veranschaulicht ist. Bei vollkommener Kompensation liegt der Linienzug 38, bezogen auf eine durch den Betriebspunkt 36 verlaufende, zur Abszisse parallele Spiegelebene 39, spiegelbildlich zur Andrückkraft 34, so daß bei Kupplungsverschleiß aufgrund der Wirkung der Kompensationsfeder 28 der Betriebspunkt 36 und damit die Andrückkraft unverändert bleibt. Damit ist auch die Betätigungskraft für die Kupplung, symbolisiert durch den Linienzug 37 unverändert, so daß der Kupplungsverschleiß auf den Betätigungskraftverlauf ohne Einfluß bleibt.

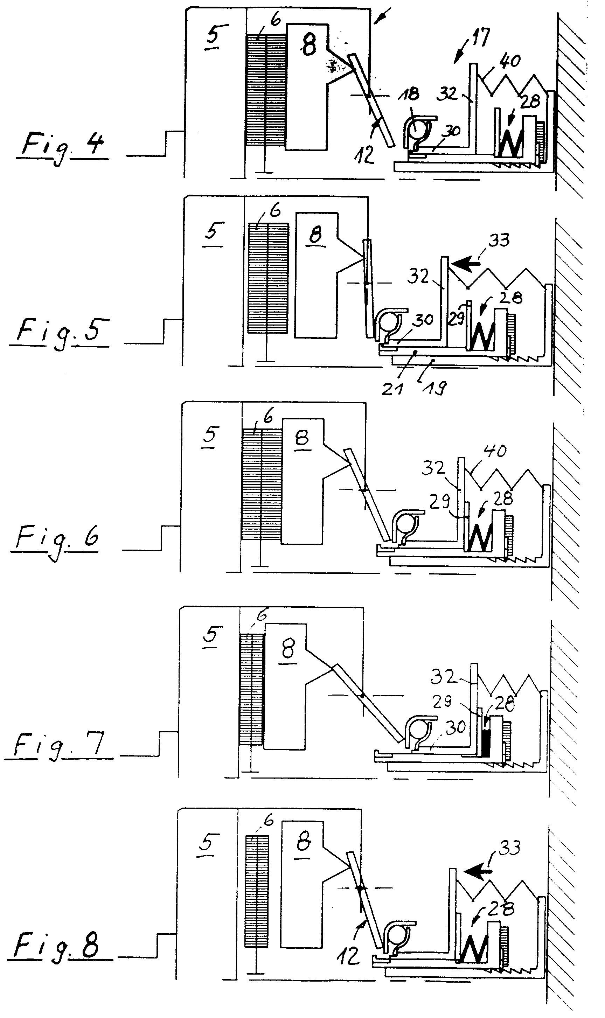

Bezogen auf eine Ausrückvorrichtung gemäß Figur 3 zeigen die Figuren 4 bis 8 das Zusammenwirken der Ausrückvorrichtung mit der Kupplung, wobei in der nachfolgenden Beschreibung dieser Ausführungsbeispiele die bisherigen Bezugszeichen Verwendung finden.

Ausgangspunkt ist Figur 4, in der Kupplung 2, Ausrückvorrichtung 17 und symbolisch dargestelltes Getriebe 3 mit dem Motor 1 zusammengebaut sind, eine Einstellung der Kupplung 2, also ein Toleranzausgleich aber noch nicht erfolgt ist.

Dieser Toleranzausgleich erfolgt, wie in Figur 5 veranschaulicht, bei der Erstbetätigung der Ausrückvorrichtung 17, bei der mittels der auf das Ausrücklagerrohr 30 ausgeübten Betätigungskraft 33 das Ausrücklagerrohr 30 bis zum Anschlag 31 zunächst gegenüber dem Toleranzausgleichsrohr 21 verschoben wird, und anschließend zusammen mit dem Toleranzausgleichsrohr 21 weiter, bis die Kupplung durch Abheben der Druckplatte 8 von der Kupplungsscheibe 6 geöffnet ist. Die bei geöffneter Kupplung erreichte Stellung des Toleranzausgleichsrohres 21 gegenüber dem Trägerrohr 19 wird fixiert über den Eingriff des Schnappringes 25 in das Sägezahnprofil 23, wobei das Sägezahnprofil 23 so ausgebildet ist, daß eine Verschiebung in Gegenrichtung, also in Richtung auf das Getriebe 3 nicht möglich ist. Die so erreichte und fixierte Lage für das Toleranzausgleichsrohr 21 entspricht der Stellung der Ausrückvorrichtung, in der die geschlossene Kupplung (Figur 6) bezüglich der Andrückkraft der Tellerfeder eine dem Betriebspunkt 35 in Figur 2 entsprechende Ausgangsstellung einnimmt. Ausgehend von dieser geschlossenen Stellung einer neuen Kupplung (Figur 6) ist in Figur 7 veranschaulicht, wie sich die Situation bei Verschleiß der Kupplungsscheibe 6 ändert.

Anhand der in Figur 7 dargestellten extremen Verschleißsituation wird erkennbar, daß die Tellerfeder 12 - einem Hebel vergleichbar - eine flachere Schwenklage einnimmt, mit anderen Worten durch die Vergrößerung des axialen Abstandes zwischen der ringförmigen Abstützung 14 an der Druckplatte und der gehäuseseitigen Abstützung in der Ringzone 13 nunmehr einen Kegel mit steilerer Konizität bildet, der, wie anhand Figur 2 erläutert, eine höhere Andrückkraft zur Folge hat. Diese Erhöhung der Andrückkraft wird kompensiert durch das Zusammendrücken der Kompensationsfeder 28, das sich dadurch ergibt, daß die stärkere Konizität der Tellerfeder mit entsprechend größerer axialer Länge des Ringbereiches 16 zu einer Verschiebung des Ausrücklagerrohres 30 in Richtung auf das Getriebe 3 und in den Kompensationsbereich der Feder 28 hineinführt, wobei diese beim Ausrücken der Kupplung, wie ihn Figur 8 zeigt, sich in Parallelschaltung zur Betätigungskraft 33 entspannt und somit in Umkehrung des Vorganges zu Figur 7 den verschleißbedingten Anstieg der Andrückfederkraft beim Ausrücken der Kupplung kompensiert.

Ist die Kompensationsfeder 28 vorgespannt, so begrenzt der Anschlag 29 einerseits den Federweg im Sinne einer Ausdehnung der Feder 28, und dient in Gegenrichtung als Anlage und Abstützung für das Ausrücklagerrohr 30. Die Feder 28 kann aber, falls sie nicht vorgespannt ist, auch unmittelbar als Anschlag und Anlage für den Bund 32 des Ausrücklagerrohres 30 dienen.

Die erfindungsgemäße Integration der Kompensation in die Ausrückvorrichtung führt zu einer besonders einfachen und einfach zu handhabenden Gesamtgestaltung.

## Patentansprüche

1. Reibungskupplung, insbesondere für Kraftfahrzeuge, mit einer zwischen zwei Anlageflächen einspannbaren, in ihrer Dicke verschleißabhängigen Kupplungsscheibe und einer der einen Anlagefläche zugehörigen, axial verlagerbaren und drehfest in einem Kupplungsgehäuse angeordneten Druckplatte, die über eine zwischen Kupplungsgehäuse und Druckplatte angeordnete Tellerfeder beaufschlagbar ist, deren über dem axialen Verschiebeweg der Druckplatte veränderliche Andrückkraft gegen die Druckplatte einen in der Schließlage der Kupplung gegebenen, der Ausgangsdicke der Kupplungsscheibe entsprechenden Ausgangswert aufweist, gegenüber dem sich abhängig vom Verschleiß der Kupplungsscheibe ein jeweils verschleißabhängiger Wert ergibt, dessen Abweichung vom Ausgangswert mittels Federmitteln durch eine überlagerte Federkraft zumindest teilweise kompensierbar ist,
**dadurch gekennzeichnet,**
daß, in der Schließlage der Kupplung (2), die der Ausgangsdicke der Kupplungsscheibe (6) entsprechende Ausgangslage der Druckplatte (8) in Richtung einer Verschiebung der Druckplatte (8) gegen die Kupplungsscheibe (6) einer Anschlagstellung der Federmittel (28) entspricht, von der aus die Federmittel (28) bei Verschiebung der Druckplatte (8) in Richtung der Kupplungsscheibe (6) die überlagerte Federkraft abgeben.

2. Reibungskupplung nach Anspruch 1,
**dadurch gekennzeichnet,**
daß die Federmittel (28) in ihrer Anschlagstellung vorspannungslos sind.

3. Reibungskupplung nach Anspruch 1,
**dadurch gekennzeichnet,**
daß die Federmittel (28) in ihrer Anschlagstellung vorgespannt sind.

4. Reibungskupplung nach Anspruch 3,
**dadurch gekennzeichnet,**
daß die Federmittel (28) gegen einen Anschlag abgestützt sind.

5. Reibungskupplung nach einem der vorhergehenden Ansprüche,
**dadurch gekennzeichnet,**
daß die Federmittel (28) ausgehend von ihrer Anschlagstellung einen Kraft-Weg-Verlauf aufweisen, der den Veränderungen der Andrückkraft der Tellerfeder (12) über dem Verschleißweg der Kupplungsscheibe (6) ausgehend von dem durch die Ausgangsdicke der Kupplungsscheibe (6) gegebenen Ausgangswert spiegelbildlich zumindest weitgehend entspricht.

6. Reibungskupplung insbesondere nach einem der vorhergehenden Ansprüche,
**dadurch gekennzeichnet,**
daß die Kupplung (2) über eine Ausrückvorrichtung (17) betätigbar ist, die die Tellerfeder (12) beaufschlagt, und daß die die überlagerte Federkraft aufbringenden Federmittel (28) der Ausrückvorrichtung (17) zugeordnet sind.

7. Reibungskupplung nach Anspruch 6,
**dadurch gekennzeichnet,**
daß die Ausrückvorrichtung (17) ein axial geführtes Ausrücklager (18) umfaßt, und daß das Ausrücklager (18) in seiner der Ausgangsdicke der Kupplungsscheibe (6) als Einstellage entsprechenden Ausgangsstellung abhängig vom Verschleiß der Kupplungsscheibe (6) gegen die Federmittel (28) axial verschiebbar ist.

8. Reibungskupplung nach Anspruch 7,
**dadurch gekennzeichnet,**
daß die Ausgangsstellung des Ausrücklagers (18) mit der Ausgangsstellung der Federmittel (28) korrespondiert.

9. Reibungskupplung nach Anspruch 8,
**dadurch gekennzeichnet,**
daß das Ausrücklager (18) einem axial verschieblichen Ausrücklagerrohr (30) zugeordnet ist.

10. Reibungskupplung nach Anspruch 9,
**dadurch gekennzeichnet,**
daß das Ausrücklagerrohr (30) zum Öffnen der Kupplung (2) mit einer Ausrückkraft als Betätigungskraft (Pfeil 33) beaufschlagbar ist.

11. Reibungskupplung nach einem der vorhergehenden Ansprüche,
**dadurch gekennzeichnet,**
daß die Federmittel (28) in ihrer Ausdehnung durch einen Anschlag (29) begrenzt sind und daß der zusammen mit den Federmitteln (28) entgegen deren Federkraft verschiebbare Anschlag (29) eine Abstützung für das Ausrücklagerrohr (30) bildet.

12. Reibungskupplung nach Anspruch 11,
**dadurch gekennzeichnet,**
daß das Ausrücklagerrohr (30) seinerseits axial verschieblich auf einer Führung (21) gelagert ist, die die Federmittel (28) trägt.

13. Reibungskupplung nach Anspruch 12,
**dadurch gekennzeichnet,**
daß die die Federmittel (28) und das Ausrücklagerrohr (30) tragende Führung ein Toleranzausgleichsrohr (21) ist.

14. Reibungskupplung nach Anspruch 13,
**dadurch gekennzeichnet,**
daß das Toleranzausgleichsrohr (21) auf einem Trägerrohr (19) geführt ist.

15. Reibungskupplung nach Anspruch 14,
**dadurch gekennzeichnet,**
daß das Trägerrohr (19) koaxial zur Eingangswelle eines der Kupplung (2) zugeordneten Getriebes (3) liegt.

16. Reibungskupplung nach einem der Ansprüche 14 oder 15,
**dadurch gekennzeichnet,**
daß das Toleranzausgleichsrohr (21) auf dem Trägerrohr (19) axial verschieblich ist.

17. Reibungskupplung nach einem der vorhergehenden Ansprüche,
**dadurch gekennzeichnet,**
daß das Toleranzausgleichsrohr (21) über eine ratschenartige Arretierung (22) gegenüber dem Trägerrohr (19) gegen Verschiebung in einer Richtung arretierbar ist.

18. Reibungskupplung nach Anspruch 17,
**dadurch gekennzeichnet,**
daß die ratschenartige Arretierung (22) den Verschiebeweg des Toleranzausgleichsrohres (21) in Richtung auf die vom Ausrücklager (18) abgelegene, getriebeseitige Abstützung des Trägerrohres (19) sperrt.
